# EUROPÄISCHE PATENTSCHRIFT

(11) **EP 2 546 777 B1**
(45) Veröffentlichungstag und Bekanntmachung des Hinweises auf die Patenterteilung: **15.01.2014**
(21) Anmeldenummer: 11174216.9
(22) Anmeldetag: 15.07.2011
(51) Int. Cl.: G06K 7/10, G05B 19/042

(54) **Verfahren und Schreib/Lesegerät für den Datenaustausch zwischen einem drahtlos zugreifbaren Datenspeicher und einer industriellen Automatisierungskomponente**
Method and read/write device for exchanging data between a wirelessly accessible data storage device and an industrial automation component
Procédé et appareil de lecture/écriture pour échange de données entre un dispositif de stockage de données portable sans fil et un composant d'automatisation industriel

(43) Veröffentlichungstag der Anmeldung: 16.01.2013
(73) Patentinhaber: Siemens Aktiengesellschaft, 80333 München (DE)
(72) Erfinder: Weinländer, Markus, 91230 Happurg (DE)

(56) Entgegenhaltungen:
- EP-A1- 1 657 606

## Beschreibung

Die Erfindung betrifft ein Verfahren zur Adressierung zumindest eines drahtlos zugreifbaren Datenspeichers gemäß dem Oberbegriff des Patentanspruchs 1, und ein Schreib/Lesegerät für den Datenaustausch zwischen einem drahtlosen Datenspeicher und einer industriellen Automatisierungskomponente gemäß dem Oberbegriff des Patentanspruchs 9.

Als mobile Datenspeicher haben sich insbesondere in der industriellen Automatisierungstechnik RFID-Systeme und RFID-Transponder etabliert, die nicht nur zum Identifizieren von Gütern aller Art verwendet werden, sondern auch als dezentrale Datenspeicher. Dies bedeutet, dass aus einem RFID-Transponder, also dem mobilen Datenspeicher, nicht nur eine eindeutige Identifizierungsnummer ausgelesen werden kann, sondern dass auch Nutzdaten auf den mobilen Datenspeicher geschrieben und aus diesem wieder ausgelesen werden können. Hierfür verfügen die Transponder über Datenspeicher, den sog. "User Memory", der in vielen Fällen eine Größe von bis zu 32 kB haben kann.

Mit Freigabe der UHF-Frequenz für RFID-Anwendungen hat sich der Standard EPCglobal etabliert. Zur Identifikation von Waren in der Logistik und ähnliche Anwendungen sieht der Standard eine eindeutige Nummer als Identifizierungsmerkmal vor, die sog. EPC-ID, wobei diese unterschiedliche Längen zwischen 16 und 496 Bit haben kann. In der Standard-Erweiterung EPCglobal Class 1 Gen 2 haben auch diese Transponder die Möglichkeit, einen "User Memory" zu verwenden. Sofern von einer Vielzahl im Funkbereich eines Schreib/Lesegerätes verfügbaren Transpondern der zugehörige "User Memory" ausgelesen werden soll, muss von einem Steuerungsgerät, beispielsweise einer industriellen Automatisierungskomponente (SPS - speicherprogrammierbare Steuerung) die EPC-ID des gewünschten Transponders an das Schreib/Lesegerät übermittelt werden, wobei diese EPC-ID dann auch zur Adressierung des gewünschten Transponders auf der Luftschnittstelle benutzt wird.

In der Kombination der Schreib/Lesegeräte mit den benannten industriellen Automatisierungskomponenten, also den speicherprogrammierbaren Steuerungen, ergibt sich jedoch das Problem, dass die Identifikationsnummern, also die EPC-ID's, der mobilen Datenspeicher (Transponder) in ihrer vollen Länge von dem Automatisierungsprogramm verarbeitet werden müssen. Dies bedeutet, dass je nach Ausgestaltung der EPC-ID ein binärcodierter numerischer Wert in der Länge von 16 bis 496 Bit verarbeitet werden muss. Die in den speicherprogrammierbaren Steuerungen üblicher Weise eingesetzten Standarddatentypen haben jedoch eine maximale "Breite" von in der Regel 32 Bit (Datentyp DWORD). Identifikationsnummern, die länger als 32 Bit sind, müssen als Array oder in einem selbst definierten Datentyp abgelegt werden, was zum einen einen erhöhten Bedarf an Speicherplatz bedeutet, und zum anderen eine Einbuße an "Performance" bei der Abarbeitung eines Automatisierungsprogramms. Zudem ist das Hantieren solcher Datenstrukturen bei der Programmierung aufwändiger, als beispielsweise das Ablegen von Identifikationsnummern in Variablen eines Standard-Datentyps.

Als Abhilfe des Problems ist es bekannt, nur einen Teil der tatsächlichen EPC-ID zur Adressierung zu verwenden, beispielsweise die letzten (niederwertigsten) 64 Bit. Diese "abgeschnittene" EPC-ID, die dann also in der Kommunikation zwischen dem Schreib/Lesegerät und der Automatisierungskomponente verwendet wird, wird dann wiederum seitens des Schreib/Lesegerätes für die Kommunikation über die Luftschnittstelle mit den RFID-Transpondern, also den Datenspeichern, um den vorher abgeschnittenen Teil wieder ergänzt. Dies bedeutet, dass zum einen der tatsächlich verwendbare Adressraum erheblich eingeschränkt ist, und zum anderen, dass der "abgeschnittene Teil" der EPC-ID's für alle verwendeten Transponder gleich sein muss, was nur in logisch in sich geschlossenen Anwendungen garantiert werden kann. In sog. "offenen" Anwendungen, also solchen Anwendungen, bei denen Waren mit solchen Datenspeichern (Transpondern) anderer Firmen etc. ausgetauscht werden sollen, kann bei der Beschränkung des Adressraums auf die beispielsweise niederwertigsten 64 Bit eine eindeutige Adressierung regelmäßig nicht garantiert werden.

Aus der Druckschrift EP 1 657 606 A1 - Hall et al. "Systems and methods that integrate RFID technology with industrial controllers" sind Anordnungen bekannt, bei denen RFID-Schreib/Lesegeräte mit speicherprogrammierbaren Steuerungen Daten über erfasste RFID-Transponder austauschen. Dabei ist eine eigenständige Filtereinrichtung vorgesehen, welche die Daten der erfassten RFID-Transponder sammelt, ggf. filtert und der speicherprogrammierbaren Steuerung zur Verfügung stellt.

Es ist also eine Aufgabe der vorliegenden Erfindung, die Verwendung der Identifikationsnummern mobiler Datenspeicher in Anwendungen mit industriellen Automatisierungskomponenten zu vereinfachen.

Es ist eine Kernidee der erfindungsgemäßen Lösung der Aufgabe, zur Identifizierung eines mobilen drahtlosen Datenspeichers eine verkürzte Identifikationsnummer, eine sog. virtuelle EPC-ID, einzuführen, wobei diese verkürzte Identifikationsnummer von einem Schreib/Lesegerät automatisch vergeben wird. Dazu soll in dem Schreib/Lesegerät eine Tabelle o.ä. geführt werden, in der jeder gelesenen tatsächlichen EPC-ID der erfassten Datenspeicher eine zweite, virtuelle Identifikationsnummer dynamisch zugeordnet wird. Diese verkürzte Identifikationsnummer kann beispielsweise aus einem 32-BitWert (Datentyp DWORD) bestehen. Somit kann diese zweite Identifikationsnummer deutlich schneller und einfacher in einem Anwendungsprogramm (SPS-Programm) einer industriellen Automatisierungskomponente verarbeitet werden, bietet aber dennoch einen genügend großen Zahlenraum, um eine hinreichend große Anzahl von Datenspeichern (RFID-Transpondern) zu unterscheiden.

Die Lösung der Aufgabe sieht insbesondere ein Verfahren gemäß dem Patentanspruch 1 vor. Dabei wird ein Verfahren zur Adressierung zumindest eines drahtlos zugreifbaren Datenspeichers in einer Anordnung mit einem Schreib/Lesegerät für den zumindest einen Datenspeicher und einer industriellen Automatisierungskomponente vorgeschlagen, wobei die Adressierung des Datenspeichers im funkbasierten Datenaustausch zwischen dem Datenspeicher und dem Schreib/Lesegerät mittels einer ersten Identifikationsnummer des Datenspeichers erfolgt. Der ersten Identifikationsnummer des Datenspeichers wird dann seitens des Schreib/Lesegerätes eine zweite Identifikationsnummer zugeordnet, die zur Identifikation des Datenspeichers bei einem auf diesem Datenspeicher bezogenen Datenaustausch des Schreib/Lesegerätes mit der Automatisierungskomponente jeweils verwendet wird. Dadurch kann zum einen Übertragungsbandbreite auf der Schnittstelle zwischen dem Schreib/Lesegerät und der Automatisierungskomponente eingespart werden, und zum anderen lassen sich die zweiten Identifikationsnummern seitens der Automatisierungskomponente deutlich besser verarbeiten, als die "ungekürzten" ersten Identifikationsnummern.

Die Lösung der Aufgabe sieht außerdem ein Schreib/Lesegerät gemäß dem Patentanspruch 9 vor. Dabei wird ein Schreib/Lesegerät für den Datenaustausch zwischen einem mobilen drahtlosen Datenspeicher und einer industriellen Automatisierungskomponente vorgeschlagen, wobei das Schreib/Lesegerät zur Adressierung des Datenspeichers im funkbasierten Datenaustausch mittels einer ersten Identifikationsnummer eingerichtet ist, wobei diese erste Identifikationsnummer dem Datenspeicher fest zugeordnet ist. Dabei ist das Schreib/Lesegerät zur Generierung und zur Zuordnung einer zweiten Identifikationsnummer zu der ersten Identifikationsnummer zumindest bei der ersten Erfassung des Datenspeichers eingerichtet, und das Schreib/Lesegerät ist zur Verwendung der zweiten Identifikationsnummer für einen den Datenspeicher betreffenden Datenaustausch mit der Automatisierungskomponente eingerichtet. Durch ein solches Schreib/Lesegerät lassen sich die in Bezug auf das erfindungsgemäße Verfahren beschriebenen Vorteile realisieren.

Vorteilhafte Ausgestaltungen des erfindungsgemäßen Verfahrens sind in den abhängigen Patentansprüchen 2 bis 8 angegeben. Die dabei diskutierten Merkmale und Vorteile gelten sinngemäß auch für das erfindungsgemäße Schreib/Lesegerät. Umgekehrt gelten die in den abhängigen Patentansprüchen 10 bis 16 beschriebenen Ausgestaltungen des erfindungsgemäßen Schreib/Lesegerätes und deren Vorteile auch sinngemäß für das erfindungsgemäße Verfahren.

Die Vorteile in Bezug auf die Verarbeitung der zweiten Identifikationsnummer seitens der industriellen Automatisierungskomponente kommen insbesondere dann zum Tragen, wenn die zweite Identifikationsnummer einen geringeren Bit-Umfang als die "originale", erste Identifikationsnummer hat. Es ist jedoch auch möglich, dass die zweite Identifikationsnummer zwar einen unveränderten oder sogar größeren "Bit-Umfang" hat, aber abweichend codiert ist. Dies kann beispielsweise in den Fällen sinnvoll sein, in denen einem Automatisierungsprogramm die tatsächliche Identifikationsnummer des mobilen Datenspeichers vorenthalten werden soll, oder aber innerhalb der zweiten Identifikationsnummer zusätzliche Angaben verschlüsselt werden sollen, beispielsweise die Empfangsfeldstärke in Bezug auf den funkbasierten Datenaustausch mit dem jeweiligen Datenspeicher bzw. Transponder.

Vorteilhaft wird die Zuordnung zwischen der ersten und der zweiten Identifikationsnummer im Schreib/Lesegerät mittels einer Datenbank oder Tabelle gespeichert. Dies ist insbesondere dann wichtig, wenn Anwendungen nicht nur über das Vorhandensein eines Datenspeichers informiert werden sollen, sondern auch seitens der Anwendung Lese-Aufträge oder Schreib-Aufträge in Bezug auf einen vorher erfassten Datenspeicher an das Schreib/Lesegerät übermittelt werden sollen. Dann werden die in der Tabelle gespeicherten Zuordnungen benötigt, um den vorher ausgelesenen oder erfassten Datenspeicher später wieder adressieren zu können.

Insbesondere bei einer Mehrzahl drahtloser Datenspeicher soll die Vergabe der zweiten Identifikationsnummern durch das Schreib/Lesegerät jeweils bei der erstmaligen Erfassung des jeweiligen Datenspeichers durchgeführt werden. Dies bedeutet, dass bei wiederholter Erfassung desselben Datenspeichers keine weitere Identifikationsnummer vergeben wird. Somit liegt für jeden erfassten Datenspeicher nur eine eindeutige Zuordnung zwischen erster und zweiter Identifikationsnummer vor. Die Zuordnung soll erst dann wieder gelöscht oder aufgehoben werden, wenn der betreffende Datenspeicher eine zeitlang nicht mehr erfasst werden konnte. Dies bedeutet, dass eine maximale Zeitdauer vorgegeben wird, und für jeden erfassten Datenspeicher die seit der letzten Erfassung verstrichene Zeitdauer gemessen wird, wobei nach Ablauf der maximalen Zeitdauer der entsprechende Eintrag in der Tabelle oder Datenbank gelöscht wird. Sollte ein Datenspeicher vor Ablauf der Zeitdauer erneut erfasst werden, wird der Ablauf der Zeitdauer zurückgesetzt, was bedeutet, dass der Ablauf der Zeitdauer von neuem zu laufen beginnt.

Die zweiten Identifikationsnummern werden den Datenspeichern vorteilhaft mit einer aufsteigenden Nummerierung in der Reihenfolge ihrer (erstmaligen) Erfassung zugeordnet. Sofern die Identifikationsnummer mit jedem neu erfassten Datenspeicher um "1" inkrementiert wird, wird der verfügbare Adressraum für die zweiten Identifikationsnummern bestmöglich ausgenutzt. Dabei wird in einer vorteilhaften Ausgestaltung nicht immer bei "0" oder "1" mit der Vergabe der zweiten Identifikationsnummern begonnen, sondern mit einem Startwert, welcher vorteilhaft auf Basis einer Pseudo-Zufallszahl gewonnen wird. Dies kann beispielsweise in den Fällen von Vorteil sein, in denen ein Schreib/Lesegerät kurzzeitig ausfällt bzw. zurückgesetzt wird ("Reset"). In einem solchen Fall würden die im Empfangsbereich des Schreib/Lesegerätes verfügbaren Datenspeicher erneut inventarisiert, wobei aber mit einer hohen Wahrscheinlichkeit die erneut zugewiesenen zweiten Identifikationsnummern nicht dieselben Datenspeicher bezeichnen, wie das vor dem Zurücksetzen oder "Reset" des Schreib/Lesegerätes der Fall war. Bei nachfolgenden Anforderungen seitens der Automatisierungskomponente würde es dann zu Adressierungen der falschen Datenspeicher kommen. Bei der Verwendung einer Pseudo-Zufallszahl als "Startwert" werden dagegen bei einem Neustart oder "Reset" des Schreib/Lesegerätes mit hoher Wahrscheinlichkeit solche zweiten Identifikationsnummern erzeugt, die im bisherigen Betrieb noch überhaupt nicht verwendet wurden. Somit können Fehl-Adressierungen vermieden werden.

Es sind Anwendungen bekannt, bei denen in der ersten Identifikationsnummer der Datenspeicher wichtige Angaben ("Nutzdaten") verschlüsselt sind. Sofern die Automatisierungskomponente diese Nutzdaten benötigt, kann durch die Automatisierungskomponente unter Angabe der zweiten Identifikationsnummer ein Auftrag an das Schreib/Lesegerät gesendet werden, wobei dieser Auftrag zum einen die zweite Identifikationsnummer des betroffenen Datenspeichers umfasst, und zum anderen vorteilhaft diejenigen Bereiche (Bit-Sequenz o.ä.) spezifiziert, die von Interesse sind. Dann wird durch das Schreib/Lesegerät der entsprechende Abschnitt der ersten Identifikationsnummer zusammen mit der Angabe der zweiten Identifikationsnummer des betreffenden Datenspeichers an die Automatisierungskomponente zurückgeliefert. In einer weiteren vorteilhaften Ausführungsform kann in dem Schreib/Lesegerät schon eine Information über die entsprechende Bit-Sequenz vorliegen, so dass die Bit-Sequenz seitens der Automatisierungskomponente in der Anforderungsnachricht nicht mehr spezifiziert werden braucht. Dies kann beispielsweise bedeuten, dass anhand einer Anforderungsnachricht grundsätzlich die ersten 32 oder 64 der ersten Identifikationsnummer, oder einer andere vordefinierte Bit-Sequenz, übermittelt wird.

Vorteilhafte Ausgestaltungen des erfindungsgemäßen Verfahrens werden nachfolgend anhand der Zeichnungen erläutert. Sie dienen gleichzeitig der Erläuterung von Ausführungsbeispielen erfindungsgemäßer Schreib/Lesegeräte.

Dabei zeigen:
- Figur 1: schematisch eine Anordnung aus vier Datenspeichern, einem Schreib/Lesegerät und einer Automatisierungskomponente, und
- Figur 2: den Ablauf des Erfassens, Zuordnens und Verwerfens von Zuordnungen am Beispiel einer "State Machine".

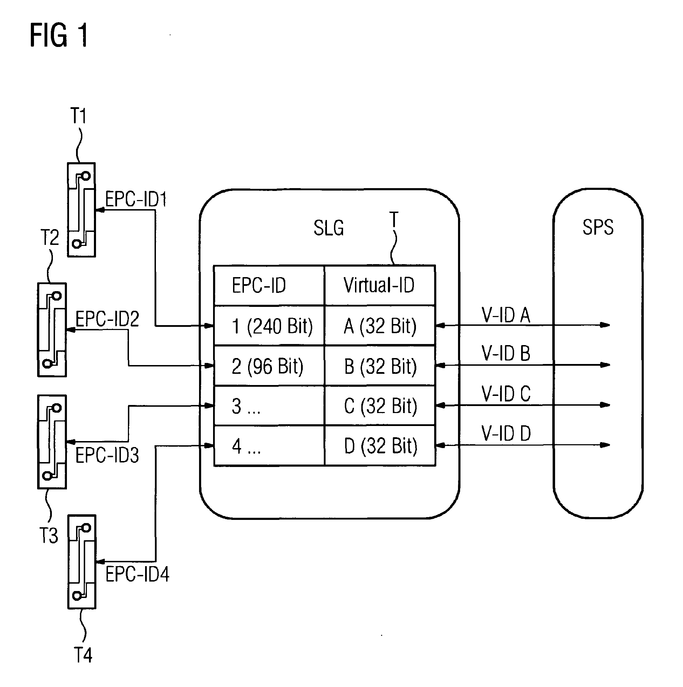

In der Figur 1 ist schematisch die Funktionsweise des erfindungsgemäßen Verfahrens dargestellt. Als Datenspeicher T1, T2, T3, T4 sind RFID-Transponder, die gemäß dem Standard EPCglobal adressiert werden, dargestellt, die sich im Funkbereich eines Schreib/Lesegerätes SLG befinden. Über eine (nicht dargestellte) Datenverbindung, beispielsweise ein Profinet o.ä., ist das Schreib/Lesegerät mit einer Automatisierungskomponente SPS verbunden. Die Datenspeicher T1, T2, T3, T4 werden über die ersten Identifikationsnummern EPC-ID1, ..., EPC-ID4 adressiert, wobei die Identifikationsnummer EPC-ID1 eine "Länge" von 240 Bit aufweist, und die Identifikationsnummer EPC-ID2 eine Länge von 96 Bit hat. In dem Schreib/Lesegerät SLG ist im flüchtigen Datenspeicher (RAM - Random Access Memory) Speicherplatz für die Tabelle T reserviert, in der die Identifikationsnummern EPC-ID1, ..., EPC-ID4 in einer ersten Spalte EPC-ID in der Reihenfolge ihrer erstmaligen Erfassung aufgelistet sind.

Das Schreib/Lesegerät SLG ("RFID-Reader") ordnet nun bei jeder erstmaligen Erfassung eines Datenspeichers T1, ..., T4 diesen eine sog. "virtuelle" zweite Identifikationsnummer VD-ID A, ..., V-ID D in der Spalte "Virtual ID" der Tabelle T zu. Diese zweiten Identifikationsnummern bestehen einheitlich aus jeweils 32 Bit, sind also vom Datentyp DWORD. Zur Vergabe der zweiten Identifikationsnummern führt das Schreib/Lesegerät einen Zähler, der vorteilhaft beim Hochlauf oder Rücksetzen des Schreib/Lesegerätes SLG mit einer Zufallszahl vorbelegt wird, also einem zufälligen Startwert. Dieser Startwert ist zugleich die zweite Identifikationsnummer (Virtual ID) für den ersten Transponder, der von dem Schreib/Lesegerät SLG erfasst wird. Für den nächsten erfassten Datenspeicher (RFID-Transponder) wird der genannte Startwert wie ein Zähler inkrementiert, vorteilhaft um den Wert 1. Dieser inkrementierte Wert wird als zweite Identifikationsnummer für den zweiten erfassten Datenspeicher, hier also den Datenspeicher T2, verwendet, usw.

Sofern das Schreib/Lesergerät (SLG) derart eingestellt ist, dass alle neuerfassten Datenspeicher an die Automatisierungskomponente SPS gemeldet werden, übermittelt das Schreib/Lesegerät SLG nach der jeweiligen Erfassung nicht mehr die erste Identifikationsnummer, also die EPC-ID, sondern ausschließlich die zweite Identifikationsnummer. Sofern die Automatisierungskomponente SPS im Gegenzug einen Zugriff (schreibend oder lesend) auf den Datenspeicher durchführen will, überträgt sie nicht die (ihr unbekannte) "global gültige" erste Identifikationsnummer an das Schreib/Lesegerät SLG, sondern die der Automatisierungskomponente SPS bekannte zweite Identifikationsnummer, also die "Virtual ID". Diese wird dann von dem Schreib/Lesegerät zur Kommunikation über die Luftschnittstelle in die seitens der Datenspeicher verwendete erste Identifikationsnummer (EPC-ID) übersetzt, und umgekehrt.

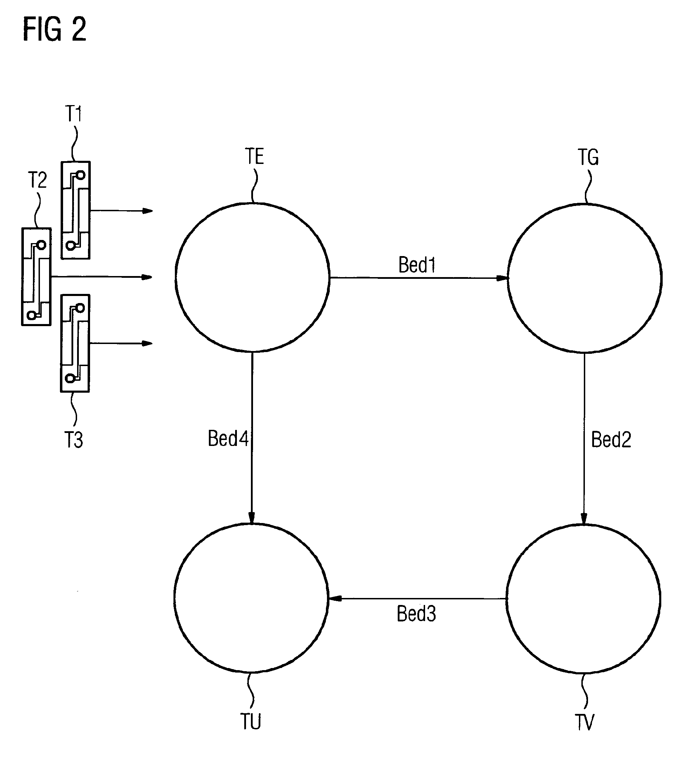

Anhand der Figur 2 wird im Folgenden die Gültigkeitsdauer der Zuordnung von zweiten Identifikationsnummern zu den ersten Identifikationsnummern erläutert. Dabei sind schematisch die Datenspeicher T1, T2, T3 dargestellt. Die den Datenspeichern T1, T2, T3 zugeordneten Zustände TE, TG, TV, TU werden seitens des Schreibe/Lesegerätes SLG nach Art einer sog. "State Machine" verwaltet. Dies bedeutet, dass die mögliche Abfolge der Zustände festgelegt ist und durch Ereignisse von einem Zustand in einen anderen Zustand gewechselt wird. Diese Ereignisse sind in der Figur 2 mit Bed1, ..., Bed4 gekennzeichnet ("Bedingung 1, ..., Bedingung 4") .

Bei seiner erstmaligen Erfassung wird für einen Datenspeicher T1, T2, T3 in der Tabelle T eine neue Zeile angelegt, was voraussetzt, dass die erste Identifikationsnummer (EPC-ID) des jeweiligen Datenspeichers T1, T2, T3 noch nicht in der Tabelle T verzeichnet ist. Dem neu erfassten Datenspeicher T1, T2, T3 wird der Status TE (TAG erfasst) zugeordnet; dieser Status wird auch als "Glimpsed" bezeichnet. Als Ereignis Bed1 für den nächsten Zustandswechsel wird vorausgesetzt, dass der Datenspeicher T1**,** T2, T3 für eine Mindestzeitspanne im Funkbereich des Schreib/Lesegerätes SLG erfasst wird; diese Mindestzeitspanne kann in einer vorteilhaften Ausgestaltung im Automatisierungsprogramm der Automatisierungskomponente SPS projektiert werden und über eine Schnittstelle mittels der Automatisierungskomponente SPS an das Schreib/Lesegerät SLG übermittelt und derart konfiguriert werden. Nach Eintritt der Bedingung Bed1 wird im entsprechenden Tabelleneintrag eine neu generierte zweite Identifikationsnummer zugeordnet. Damit wird der Zustand TG (TAG gültig) erreicht; dieser Zustand wird auch als "observed" bezeichnet. Sofern der Datenspeicher T1, T2, T3 für eine maximale Zeitdauer, die in einer vorteilhaften Ausgestaltung ebenfalls über die Automatisierungskomponente SPS projektierbar und einstellbar ist, durchgehend nicht erkannt oder erfasst worden ist, ist die Bedingung Bed2 erfüllt, wodurch die entsprechende zweite Identifikationsnummer als ungültig gekennzeichnet wird. Damit ist der Zustand TV (TAG verloren), der auch als "lost" bezeichnet wird, eingetreten. Dabei ist die erste Identifikationsnummer des entsprechenden Datenspeichers T1, T2, T3 noch nicht endgültig gelöscht, was bedeutet, dass nach einem "Wieder-Auffinden" der Zustand TG wieder eingestellt werden kann. Sofern jedoch der Datenspeicher T1, T2, T3 für eine weitere Zeitspanne nicht gelesen oder aufgefunden werden kann (Bedingung Bed3), wird die zweite Identifikationsnummer gelöscht, wodurch der Zustand TU (TAG unbekannt), der auch als "unknown" bezeichnet wird, erreicht ist. Alternativ zur Löschung der zweiten Identifikationsnummer dieses Datenspeichers T1, T2, T3 kann auch eine entsprechende andere Kennzeichnung des Tabelleneintrages erfolgen. Wenn ausgehend von der ersten Erfassung (Zustand TE) die Mindestdauer der Erfassung nicht erreicht wird (Bedingung Bed4), wird vom Zustand TE direkt in den Zustand TU gewechselt.

Damit ist die zweite Identifikationsnummer, die sog. "Virtual-ID", so lange gültig, so lange sich der zugeordnete Datenspeicher T1, T2, T3 bzw. "Transponder" im Funkfeld des Schreib/Lesegerätes (Readers) befindet. Da sich aufgrund der Eigenschaften des zugrundeliegenden UHF-Funksystems Funklöcher ergeben können, insbesondere durch Reflexionen und Auslöschungen, kann es passieren, dass ein Datenspeicher nicht bei jedem "Scan" des Schreib/Lesegerätes SLG erfasst wird. Um in einem solchen Fall dem entsprechenden Datenspeicher T1, T2, T3 keine neue zweite Identifikationsnummer zuzuordnen, wird die beschriebene "State Machine" im Schreib/Lesegerät SLG verwendet. Durch diese "State Machine" wird ein bestimmter Zeitraum oder eine bestimmte Anzahl an "Scans" definiert, für die es toleriert wird, dass sich ein Datenspeicher nicht im Funkfeld befindet bzw. dort nicht aufgefunden werden kann. Erst danach gilt der Datenspeicher als verloren oder unbekannt; d.h., dass bei einer späteren neuerlichen Erfassung des Datenspeichers T1, T2, T3 eine neue (andere) zweite Identifikationsnummer zugeordnet wird.

Dadurch, dass keine vollständigen globalen "EPC-ID's" zur Adressierung genutzt werden, ergibt sich in Bezug auf die Kommunikation mit der Automatisierungskomponente und der Datenverarbeitung in der Automatisierungskomponente ein Performance-Vorteil. Als Beispiel sollen zwei Datenspeicher T3, T4 betrachtet werden, die jeweils eine erste Identifikationsnummer mit einer Datenfeld-Länge von je 240 Bit aufweisen. Sofern seitens der Automatisierungskomponente SPS aus dem "User Memory" der Datenspeicher T3, T4 (nicht dargestellt) jeweils 16 Bit, beispielsweise zur Steuerung einer Maschine, ausgelesen werden sollen, werden nach einer Implementierung gemäß dem Stand der Technik allein zur Adressierung 2 x 240 Bit als EPC-ID vom Schreib/Lesegerät SLG zur Automatisierungskomponente SPS übertragen, danach nochmals 2 x 240 Bit zur Adressierung der Datenspeicher T3, T4 von der Automatisierungskomponente SPS zum Schreib/Lesegerät SLG und danach entsprechend dem Lesebefehl zweimal 16 Bit aus den User Memories, gekoppelt mit 2 x 240 Bit der EPC-ID's (um die entsprechenden Einträge aus dem "User Memory" dem jeweiligen Datenspeicher T3, T4 zuordnen zu können), womit insgesamt 1472 Bit zuzüglich des protokollgemäßen "Overheads" übertragen werden müssen. Durch die erfindungsgemäße Implementierung werden statt der 240 Bit langen EPC-ID's immer die zweiten Identifikationsnummern ("Virtual-ID's)mit je 32 Bit verwendet, so dass die zu übertragende Datenmenge nur noch 224 Bit (zuzüglich des jeweils erforderlichen protokollgemäßen Overheads) ergibt.

Ferner können in der Automatisierungskomponente SPS die sog. "Handles", also die Adressobjekte für die Datenspeicher T1, T2, T3, T4 einfacher verarbeitet werden.

Weiter werden durch die Nutzung der beschriebenen "State Machine" ungewollte Neubildungen von zweiten Identifikationsnummern in Folge von "Funklöchern" und ähnlichen Störungen vermieden.

## Patentansprüche

1. Verfahren zur Adressierung zumindest eines drahtlos zugreifbaren Datenspeichers (T1, ..., T4) in einer Anordnung mit einem Schreib/Lesegerät (SLG) für den zumindest einen Datenspeicher (T1, ..., T4) und einer industriellen Automatisierungskomponente (SPS),
wobei die Adressierung des Datenspeichers (T1, ..., T4) im funkbasierten Datenaustausch zwischen dem Datenspeicher (T1, ..., T4) und dem Schreib/Lesegerät (SLG) mittels einer ersten Identifikationsnummer (EPC-ID1, ..., EPC-ID4) des Datenspeichers (T1, ..., T4) erfolgt,
**dadurch gekennzeichnet,**
**dass** der ersten Identifikationsnummer (EPC-ID1, ..., EPC-ID4) des Datenspeichers (T1, ..., T4) seitens des Schreib/Lesegerätes (SLG) eine zweite Identifikationsnummer (V-ID A, ..., V-ID D) zugeordnet wird, und
**dass** zur Identifikation des Datenspeichers (T1, ..., T4) bei einem auf diesen Datenspeicher (T1, ..., T4) bezogenen Datenaustausch des Schreib/Lesegerätes (SLG) mit der Automatisierungskomponente (SPS) jeweils die zweite Identifikationsnummer (V-ID A, ..., V-ID D) verwendet wird.

2. Verfahren nach Patentanspruch 1,
**dadurch gekennzeichnet,**
**dass** als die zweite Identifikationsnummer (V-ID A, ..., V-ID D) ein binär codierter numerischer Wert verwendet wird, der eine geringere Anzahl an Bits aufweist, als ein binär codierter numerischer Wert der ersten Identifikationsnummer (EPC-ID1, ..., EPC-ID4).

3. Verfahren nach einem der vorhergehenden Patentansprüche, **dadurch gekennzeichnet,**
**dass** die Zuordnung zwischen der ersten und der zweiten Identifikationsnummer (V-ID A, ..., V-ID D) im Schreib/Lesegerät (SLG) mittels einer Datenbank oder Tabelle (T) gespeichert wird.

4. Verfahren nach einem der vorhergehenden Patentansprüche, **dadurch gekennzeichnet,**
**dass** bei einer Mehrzahl drahtloser Datenspeicher (T1, ..., T4) die Vergabe der zweiten Identifikationsnummern (V-ID A, ..., V-ID D) durch das Schreib/Lesegerät (SLG) jeweils bei der erstmaligen Erfassung der Datenspeicher (T1, ..., T4) durchgeführt wird.

5. Verfahren nach Patentanspruch 4,
**dadurch gekennzeichnet,**
**dass** die zweiten Identifikationsnummern (V-ID A, ..., V-ID D) in einer aufsteigenden Reihenfolge vergeben werden, wobei als Startwert ein Pseudo-Zufallswert verwendet wird, und
wobei der Pseudo-Zufallswert zumindest bei jedem Neustart des Schreib/Lesegerätes (SLG) neu erzeugt wird.

6. Verfahren nach einem der vorhergehenden Patentansprüche, **dadurch gekennzeichnet,**
**dass** die Gültigkeit der zweiten Identifikationsnummer (V-ID A, ..., V-ID D) und deren Zuordnung zu der ersten Identifikationsnummer (EPC-ID1, ..., EPC-ID4) auf eine vorbestimmte Zeitdauer begrenzt ist, wobei nach Ablauf der Zeitdauer die Zuordnung der zweiten Identifikationsnummer (V-ID A, ..., V-ID D) zu der ersten Identifikationsnummer (EPC-ID1, ..., EPC-ID4) ungültig oder gelöscht wird.

7. Verfahren nach Patentanspruch 6,
**dadurch gekennzeichnet,**
**dass** mit jeder erneuten Erfassung des Datenspeichers (T1, ..., T4) durch das Schreib/Lesegerät (SLG) der Ablauf der Zeitdauer zurückgesetzt wird.

8. Verfahren nach einem der vorhergehenden Patentansprüche, **dadurch gekennzeichnet,**
**dass** durch das Schreib/Lesegerät (SLG) nach einer Anforderung durch die Automatisierungskomponente (SPS) ein dabei angeforderter Teil der ersten Identifikationsnummer (EPC-ID1, ..., EPC-ID4) eines bei der Anforderung mittels der zweiten Identifikationsnummer (V-ID A, ..., V-ID D) identifizierten Datenspeichers (T1, ..., T4) zu der Automatisierungskomponente (SPS) übertragen wird.

9. Schreib/Lesegerät (SLG) für den Datenaustausch zwischen einem drahtlos zureifbaren Datenspeicher (T1, ..., T4) und einer industriellen Automatisierungskomponente (SPS),
wobei das Schreib/Lesegerät (SLG) zur Adressierung des Datenspeichers (T1, ..., T4) im funkbasierten Datenaustausch mittels einer ersten Identifikationsnummer (EPC-ID1, ..., EPC-ID4) eingerichtet ist, wobei diese erste Identifikationsnummer (EPC-ID1, ..., EPC-ID4) dem Datenspeicher (T1 ..., T4) fest zugeordnet ist,
**dadurch gekennzeichnet,**
**dass** das Schreib/Lesegerät (SLG) zur Generierung und zur Zuordnung einer zweiten Identifikationsnummer (V-ID A, ..., V-ID D) zu der ersten Identifikationsnummer (EPC-ID1, ..., EPC-ID4) zumindest bei der ersten Erfassung des Datenspeichers (T1, ..., T4) eingerichtet ist, und
**dass** das Schreib/Lesegerät (SLG) zur Verwendung der zweiten Identifikationsnummer (V-ID A, ..., V-ID D) für einen den Datenspeicher (T1, ..., T4) betreffenden Datenaustausch mit der Automatisierungskomponente (SPS) eingerichtet ist.

10. Schreib/Lesegerät (SLG) nach Patentanspruch 9,
**dadurch gekennzeichnet,**
**dass** die zweite Identifikationsnummer (V-ID A, ..., V-ID D) eine geringere Anzahl an Bits aufweist, als die erste Identifikationsnummer (EPC-ID1, ..., EPC-ID4).

11. Schreib/Lesegerät (SLG) nach einem der Patentansprüche 9 oder 10,
**dadurch gekennzeichnet,**
**dass** das Schreib/Lesegerät (SLG) Speichermittel für die Speicherung von Zuordnungen zwischen ersten und zweiten Identifikationsnummern (V-ID A, ..., V-ID D) einer Mehrzahl an Datenspeichern (T1, ..., T4) aufweist.

12. Schreib/Lesegerät (SLG) nach einem der Patentansprüche 9 bis 11,
**dadurch gekennzeichnet,**
**dass** das Schreib/Lesegerät (SLG) im Falle der Verwendung einer Mehrzahl an Datenspeichern (T1, ..., T4) zur Vergabe der zweiten Identifikationsnummern (V-ID A, ..., V-ID D) bei jeweils erstmaliger Erfassung des jeweiligen Datenspeichers (T1, ..., T4) in einer aufsteigenden Reihenfolge eingerichtet ist.

13. Schreib/Lesegerät (SLG) nach Patentanspruch 12,
**dadurch gekennzeichnet,**
**dass** das Schreib/Lesegerät (SLG) zur Verwendung eines Pseudo-Zufallwertes als Startwert für die aufsteigende Reihenfolge eingerichtet ist, wobei das Schreib/Lesegerät (SLG) zur neuen Generierung eines Pseudo-Zufallwertes zumindest bei jedem Neustart des Schreib/Lesegerätes (SLG) eingerichtet ist.

14. Schreib/Lesegerät (SLG) nach einem der Patentansprüche 9 bis 13,
**dadurch gekennzeichnet,**
**dass** das Schreib/Lesegerät (SLG) für jeden erfassten und mit einer Zuordnung versehenen Datenspeicher (T1, ..., T4) zur Bestimmung der seit der letzten Erfassung jeweils verstrichenen Zeitdauer eingerichtet ist, wobei das Schreib/Lesegerät (SLG) derart eingerichtet ist, dass nach Ablauf einer vorbestimmten maximalen Zeitdauer die jeweilige Zuordnung als ungültig bewertet wird.

15. Schreib/Lesegerät (SLG) nach Patentanspruch 14,
**dadurch gekennzeichnet,**
**dass** das Schreib/Lesegerät (SLG) derart eingerichtet ist, dass mit jeder erneuten Erfassung des jeweiligen Datenspeichers (T1, ..., T4) der Ablauf der jeweiligen Zeitdauer zurückgesetzt wird.

16. Schreib/Lesegerät (SLG) nach einem der Patentansprüche 9 bis 15,
**dadurch gekennzeichnet,**
**dass** das Schreib/Lesegerät (SLG) derart eingerichtet ist, dass nach einer eine zweite Identifikationsnummer (V-ID A, ..., V-ID D) umfassenden Anforderung der Automatisierungskomponente (SPS) ein Teil der ersten Identifikationsnummer (EPC-ID1, ..., EPC-ID4) des mit der zweiten Identifikationsnummer (V-ID A, ..., V-ID D) der Anforderung spezifizierten Datenspeichers (T1, ..., T4) zu der Automatisierungskomponente (SPS) übermittelt wird.

## Claims

1. Method for addressing at least one wirelessly accessible data memory (T1, ..., T4) in an arrangement having a read/write device (SLG) for the at least one data memory (T1, ..., T4) and an industrial automation component (SPS),
the data memory (T1, ..., T4) being addressed, during radio-based data interchange between the data memory (T1, ..., T4) and the read/write device (SLG), using a first identification number (EPC-ID1, ..., EPC-ID4) of the data memory (T1, ..., T4),
**characterized**
**in that** the read/write device (SLG) assigns a second identification number (V-ID A, ..., V-ID D) to the first identification number (EPC-ID1, ..., EPC-ID4) of the data memory (T1, ..., T4), and
**in that** the second identification number (V-ID A, ..., V-ID D) is respectively used to identify the data memory (T1, ..., T4) in the event of data interchange between the read/write device (SLG) and the automation component (SPS) on the basis of this data memory (T1, ..., T4).

2. Method according to Patent Claim 1,
**characterized**
**in that** a binary coded numerical value having a smaller number of bits than a binary coded numerical value of the first identification number (EPC-ID1, ..., EPC-ID4) is used as the second identification number (V-ID A, ..., V-ID D).

3. Method according to one of the preceding patent claims, **characterized**
**in that** the assignment between the first identification number and the second identification number (V-ID A, ..., V-ID D) is stored in the read/write device (SLG) using a database or table (T).

4. Method according to one of the preceding patent claims, **characterized**
**in that**, in the case of a plurality of wireless data memories (T1, ..., T4), the read/write device (SLG) respectively allocates the second identification numbers (V-ID A, ..., V-ID D) when the data memories (T1, ..., T4) are detected for the first time.

5. Method according to Patent Claim 4,
**characterized**
**in that** the second identification numbers (V-ID A, ..., V-ID D) are allocated in an ascending order, a pseudo random value being used as the starting value, and the pseudo random value being newly generated at least each time the read/write device (SLG) is restarted.

6. Method according to one of the preceding patent claims, **characterized**
**in that** the validity of the second identification number (V-ID A, ..., V-ID D) and its assignment to the first identification number (EPC-ID1, ..., EPC-ID4) are limited to a predetermined period of time, the assignment of the second identification number (V-ID A, ..., V-ID D) to the first identification number (EPC-ID1, ..., EPC-ID4) becoming invalid or being deleted after the period of time.

7. Method according to Patent Claim 6,
**characterized**
**in that** the read/write device (SLG) resets the the period of time each time the data memory (T1, ..., T4) is detected again.

8. Method according to one of the preceding patent claims, **characterized**
**in that**, after a request from the automation component (SPS), the read/write device (SLG) transmits a requested part of the first identification number (EPC-ID1, ..., EPC-ID4) of a data memory (T1, ..., T4) identified in the request using the second identification number (V-ID A, ..., V-ID D) to the automation component (SPS).

9. Read/write device (SLG) for interchanging data between a wirelessly accessible data memory (T1, ..., T4) and an industrial automation component (SPS), the read/write device (SLG) being set up to address the data memory (T1, ..., T4), during radio-based data interchange, using a first identification number (EPC-ID1, ..., EPC-ID4), this first identification number (EPC-ID1, ..., EPC-ID4) being permanently assigned to the data memory (T1, ..., T4), **characterized**
**in that** the read/write device (SLG) is set up to generate and assign a second identification number (V-ID A, ..., V-ID D) to the first identification number (EPC-ID1, ..., EPC-ID4) at least when the data memory (T1, ..., T4) is first detected, and
**in that** the read/write device (SLG) is set up to use the second identification number (V-ID A, ..., V-ID D) for data interchange with the automation component (SPS), which data interchange concerns the data memory (T1, ..., T4).

10. Read/write device (SLG) according to Patent Claim 9, **characterized**
**in that** the second identification number (V-ID A, ..., V-ID D) has a smaller number of bits than the first identification number (EPC-ID1, ..., EPC-ID4).

11. Read/write device (SLG) according to either of Patent Claims 9 and 10,
**characterized**
**in that** the read/write device (SLG) has storage means for storing assignments between first and second identification numbers (V-ID A, ..., V-ID D) of a plurality of data memories (T1, ..., T4).

12. Read/write device (SLG) according to one of Patent Claims 9 to 11,
**characterized**
**in that**, when a plurality of data memories (T1, ..., T4) are used, the read/write device (SLG) is set up to allocate the second identification numbers (V-ID A, ..., V-ID D) in an ascending order each time the respective data memory (T1, ..., T4) is detected for the first time.

13. Read/write device (SLG) according to Patent Claim 12, **characterized**
**in that** the read/write device (SLG) is set up to use a pseudo random value as the starting value for the ascending order, the read/write device (SLG) being set up to newly generate a pseudo random value at least each time the read/write device (SLG) is restarted.

14. Read/write device (SLG) according to one of Patent Claims 9 to 13,
**characterized**
**in that**, for each data memory (T1, ..., T4) which has been detected and has been provided with an assignment, the read/write device (SLG) is set up to determine the period of time which has respectively elapsed since the last detection, the read/write device (SLG) being set up in such a manner that the respective assignment is assessed to be invalid after a predetermined maximum period of time.

15. Read/write device (SLG) according to Patent Claim 14, **characterized**
**in that** the read/write device (SLG) is set up in such a manner that the respective period of time is reset each time the respective data memory (T1, ..., T4) is detected again.

16. Read/write device (SLG) according to one of Patent Claims 9 to 15,
**characterized**
**in that** the read/write device (SLG) is set up in such a manner that, after a request from the automation component (SPS), which request comprises a second identification number (V-ID A, ..., V-ID D), part of the first identification number (EPC-ID1, ..., EPC-ID4) of the data memory (T1, ..., T4) specified with the second identification number (V-ID A, ..., V-ID D) in the request is transmitted to the automation component (SPS).

## Revendications

1. Procédé d'adressage d'au moins une mémoire (T1, ..., T4) de données accessible sans fil, dans un agencement ayant un appareil (SLG) d'écriture/lecture pour la au moins une mémoire (T1, ..., T4) de données et un composant (SPS) industriel d'automatisation,
dans lequel l'adressage de la mémoire (T1, ..., T4) de données s'effectue dans l'échange de données radio entre la mémoire (T1, ..., T4) de données et l'appareil (SLG) d'écriture/lecture, au moyen d'un premier numéro (EPC-ID1, ..., EPC-ID4) d'identification de la mémoire (T1, ..., T4) de données,
**caractérisé**
**en ce que** l'on affecte au premier numéro (EPC-ID1, ..., EPC-ID4) d'identification de la mémoire (T1, ..., T4) de données, du côté de l'appareil (SLG) d'écriture/lecture, un deuxième numéro (V-ID A, ..., V-ID D) d'identification, et
**en ce que**, pour l'identification de la mémoire (T1, ..., T4) de données, on utilise, lors d'un échange de données, rapporté à cette mémoire (T1, ..., T4) de données, de l'appareil (SLG) d'écriture/lecture avec un composant (SPS) d'automatisation, respectivement le deuxième numéro (V-ID A, ..., V-ID D) d'identification.

2. Procédé suivant la revendication 1,
**caractérisé**
**en ce que** l'on utilise, comme deuxième numéro (V-ID A, ..., V-ID D) d'identification, une valeur numérique codée de manière binaire, qui a un nombre de bits plus petit qu'une valeur numérique codée de manière primaire du premier numéro (EPC-ID1, ..., EPC-ID4) d'identification.

3. Procédé suivant l'une des revendications précédentes, **caractérisé**
**en ce que** l'on mémorise l'affectation entre le premier et le deuxième numéros (V-DI A, ..., V-ID D) d'identification dans l'appareil (SLG) d'écriture/lecture, au moyen d'une base de données ou d'une table (T).

4. Procédé suivant l'une des revendications précédentes, **caractérisé**
**en ce que**, s'il y a une multiplicité de mémoires (T1, ..., T4) de données sans fil, on effectue l'attribution des deuxièmes numéros (V-ID A, ..., V-ID D) d'identification par l'appareil (SLG) d'écriture/lecture, respectivement lors de la détection pour la première fois de la mémoire (T1, ..., T4) de données.

5. Procédé suivant la revendication 4,
**caractérisé**
**en ce que** l'on attribue les deuxièmes numéros (V-ID A, ..., V-ID D) d'identification dans un ordre croissant, en utilisant comme valeur de départ une valeur pseudo-aléatoire, et on produit la valeur pseudo-aléatoire au moins à chaque redémarrage de l'appareil (SLG) d'écriture/lecture.

6. Procédé suivant l'une des revendications précédentes, **caractérisé**
**en ce que** la validité du deuxième numéro (V-ID A, ..., V-ID D) d'identification et son affectation au premier numéro (EPC-ID1, ..., EPC-ID4) d'identification est limitée à une durée déterminée à l'avance, l'affectation du deuxième numéro (V-ID A, ..., V-ID D) d'identification au premier numéro (EPC-ID1, ..., EPC-ID4) d'identification étant invalidée ou effacée après l'expiration de la durée.

7. Procédé suivant la revendication 6,
**caractérisé**
**en ce qu'**à chaque re-détection de la mémoire (T1, ..., T4) de données par l'appareil (SLG) d'écriture/lecture, on remet à zéro l'écoulement de la durée.

8. Procédé suivant l'une des revendications précédentes, **caractérisé**
**en ce que** l'on transmet au composant (SPS) d'automatisation, par l'appareil (SLG) d'écriture/lecture, après une demande du composant (SPS) d'automatisation, une partie ainsi demandée du premier numéro (EPC-ID1, ..., EPC-ID4) d'identification d'une mémoire (T1, ..., T4) de données identifiée, lors de la demande, au moyen du deuxième numéro (V-ID A, ..., V-ID D) d'identification.

9. Appareil (SLG) d'écriture/lecture pour l'échange de données entre une mémoire (T1, ..., T4) de données accessible sans fil et un composant (SPS) industriel d'automatisation, l'appareil (SLG) d'écriture/lecture étant conçu pour l'adressage de la mémoire (T1, ..., T4) de données en échange de données radio, au moyen d'un premier numéro ( EPC-ID1, ..., EPC-ID4) d'identification, ce premier numéro (EPC-ID1, ..., EPC-ID4) d'identification étant affecté, de manière fixe, à la mémoire (T1, ..., T4) de données,
**caractérisé**
**en ce que** l'appareil (SLG) d'écriture/lecture est conçu pour la production et l'affectation d'un deuxième numéro (V-ID A, ..., V-ID D) d'identification au premier numéro (EPC-ID1, ..., EPC-ID4) d'identification, au moins lors de la première détection de la mémoire (T1, ..., T4) de données, et
**en ce que** l'appareil (SLG) d'écriture/lecture est conçu pour l'utilisation du deuxième numéro (V-ID A, ..., V-ID D), pour un échange de données concernant la mémoire (T1, ..., T4) de données avec le composant (SPS) d'automatisation.

10. Appareil (SLG) d'écriture/lecture suivant la revendication 9,
**caractérisé**
**en ce que** le deuxième numéro (V-ID A, ..., V-ID D) d'identification a un nombre de bits plus petit que le premier numéro (EPC-ID1, ..., EPC-ID4) d'identification.

11. Appareil (SLG) d'écriture/lecture suivant l'une des revendications 9 ou 10,
**caractérisé**
**en ce que** l'appareil (SLG) d'écriture/lecture a des moyens de mémorisation pour la mémorisation d'affectations entre des premiers et deuxièmes numéros (V-ID A, ..., V-ID D) d'identification d'une multiplicité de mémoires (T1, ..., T4) de données.

12. Appareil (SLG) d'écriture/lecture suivant l'une des revendications 9 à 11,
**caractérisé**
**en ce que** l'appareil (SLG) d'écriture/lecture est, dans le cas de l'utilisation d'une multiplicité de mémoires (T1, ..., T4) de données, conçu pour l'attribution dans un ordre croissant des deuxièmes numéros (V-ID A, ..., V-ID D) d'identification, lors de la détection, pour la première fois respectivement, de la mémoire (T1, ..., T4) de données respectives.

13. Appareil (SLG) d'écriture/lecture suivant la revendication 12,
**caractérisé**
**en ce que** l'appareil (SLG) d'écriture/lecture est conçu pour l'utilisation d'une valeur pseudo-aléatoire comme valeur initiale pour l'ordre croissant, l'appareil (SLG) d'écriture/lecture étant conçu pour produire à nouveau une valeur pseudo-aléatoire, au moins à chaque redémarrage de l'appareil (SLG) d'écriture/lecture.

14. Appareil (SLG) d'écriture/lecture suivant l'une des revendications 9 à 13,
**caractérisé**
**en ce que** l'appareil (SLG) d'écriture/lecture, pour chaque mémoire (T1, ..., T4) de données détectée et munie d'une affectation, est conçu pour la détermination de la durée écoulée respectivement depuis la dernière détection, l'appareil (SLG) d'écriture/lecture étant conçu de manière à évaluer l'affectation respective comme non valable après l'expiration d'une durée maximum déterminée à l'avance.

15. Appareil (SLG) d'écriture/lecture suivant la revendication 14,
**caractérisé**
**en ce que** l'appareil (SLG) d'écriture/lecture est conçu pour remettre à zéro l'expiration de la durée respective, à chaque détection renouvelée de la mémoire (T1, ..., T4) de données respectives.

16. Appareil (SLG) d'écriture/lecture suivant l'une des revendications 9 à 15,
**caractérisé**
**en ce que** l'appareil (SLG) d'écriture/lecture est conçu pour transmettre au composant (SPS) d'automatisation, après une demande du composant (SPS) d'automatisation comprenant un deuxième numéro (V-ID A, ..., V-ID D) d'identification, une partie du premier numéro (EPC-ID1, ..., EPC-ID4) d'identification de la mémoire (T1, ..., T4) de données spécifiée par le deuxième numéro (V-ID A, ..., V-ID D) d'identification de la demande.
